# EUROPEAN PATENT APPLICATION

(11) **EP 2 360 563 A1**
(43) Date of publication of application: **24.08.2011**
(21) Application number: 10187805.6
(22) Date of filing: 15.10.2010
(51) Int. Cl.: G06F 3/048, G06F 3/01

(54) **Prominent selection cues for icons**

(30) Priority: 15.02.2010 US 304756 P
(71) Applicant: RESEARCH IN MOTION LIMITED, Waterloo, Ontario N2L 3W8 (CA)
(72) Inventor: Langlois, Michael George, Kanata Ontario K2K 3K2 (CA); Kumar, Arun, Waterloo Ontario N2L 5Z5 (CA); Nguyen, Hung Cuong, Mississauga Ontario L4W 0B4 (CA); Patterson, Andrew Robert, Waterloo Ontario N2L 3L3 (CA)
(74) Representative: Roberts, Gwilym Vaughan

(57) **Abstract**

A method, apparatus and computer-readable medium is disclosed for prominent selection cues for icons (113). When an icon (114) is in focus, and after expiration of a predetermined period of time, the icon (114) can be displayed more prominently, e.g., display a larger representation of the icon (200), thereby increasing the icon's (200) visibility. The icon (200) can be displayed more prominently after the icon (200) remains in focus for a predetermined amount of time. This functionality can be advantageous in applications having limited display area, such as on portable media players and mobile devices. Accordingly, the smaller display area of such devices is used more effectively by using prominent selection cues for navigating and displaying information.

## Description

### FIELD OF TECHNOLOGY

The present disclosure relates generally to user interfaces on mobile devices or other devices with limited viewing areas and, in particular, to user interfaces presented on a display of a device capable of presenting media content.

### BACKGROUND

Some mobile devices, such as smart phones, can present media content to a user. Media content can include audio (such as music), videos (which can include audio components), still pictures, documents, spreadsheets, presentations and combinations thereof. Media content in the form of audio can be presented to a user by playing the audio content through a speaker or headphones, for example. Media content in the form of video or pictures can be presented to a user by displaying images on a display, with or without audio.

Disadvantageously, mobile devices often have a limited display area; the smaller display area of such devices creates difficulty for navigating and displaying media content. Consequently, such devices often have a limited ability to present media content and display detailed information. Moreover, the limited display area inhibits the user's ability to navigate media content.

### SUMMARY

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. The features of the disclosure will become more fully apparent from the following description and appended claims, or can be learned by the practice of the principles set forth herein.

Disclosed herein are systems, methods, and computer-readable storage media for prominent selection cues for icons. In accordance with the disclosure, the presentation of media content on mobile devices is improved with a graphical user interface for navigating media content using icons as visual cues and enlarging selected icons to enhance the user experience. Prominent selection cues for icons can be advantageous in applications having a limited display area, such as portable media players and mobile devices, because prominent selection cues provide a more efficient use of the limited display area of such devices: the presentation and navigation of media content is improved by using prominent selection cues for navigating and displaying information.

### BRIEF DESCRIPTION OF THE DRAWINGS

Exemplary methods and arrangements conducted and configured according to the advantageous solutions presented herein are depicted in the accompanying drawings wherein:

FIG. 1 lustrates one implementation of a mobile device with album art in a first configuration in accordance with the present disclosure;

FIG. 2 illustrates the implementation of the mobile device of FIG. 1, wherein the album art is in a second configuration that is more prominent than the first in accordance with the present disclosure;

FIG. 3 illustrates a flow chart of an implementation of steps for displaying prominent selection cues according to the present disclosure;

FIG. 4 illustrates a pattern of tactile feedback locations on keys of a keyboard displayed on a touch-sensitive display in accordance with the present disclosure;

FIG. 5 illustrates a different implementation of a mobile device incorporating the prominent selection cues of the present disclosure;

FIG. 6 is a front view of another exemplary mobile device including a full QWERTY keyboard;

FIG. 7 is a detail view of a reduced QWERTY keyboard; and

FIG. 8 is a block diagram representing a wireless handheld communication device interacting in a communication network.

### DETAILED DESCRIPTION

For simplicity and clarity of illustration, where appropriate, reference numerals have been repeated among the different figures to indicate corresponding or analogous elements. In addition, numerous specific details are set forth to provide a thorough understanding of the implementations described herein. However, the implementations described herein can be practiced without such specific details. In other instances, methods, procedures and components have not been described in detail so as not to obscure the related relevant feature being described. Also, the description is not to be considered as limiting the scope of the implementations described herein.

Mobile devices typically include memory that enables the device to store significant amounts of media content. As the volume of media content stored on the mobile device increases, the need for presenting the media content in ways that make the media more accessible to the user, and the benefits of doing so, also increase. Accordingly, a user interface can be implemented to browse through the media content stored on the mobile device, thereby allowing the user interface to be more intuitive.

The mobile device as described herein can be an electronic communication device, smartphone, laptop computer, portable media player or the like, but can also include non-mobile devices such as personal computers. As will be discussed in more detail below, a mobile device can include one or more interfaces by which a user can make a selection. Moreover, a mobile device can execute one or more functions in response to a user selection. Physical components for receiving a selection include, but are not limited to, buttons, keys, trackballs, touch pads, touch screens or the like. While the disclosure herein refers to a touch pad, one of the above devices can be implemented instead. The touch pad as described herein can be configured to optically sense the motion thereon. Additionally, in at least one implementation, the touch pad can be depressible to function as a button, in addition to a navigational input device. In yet other implementations, the touch pad can be configured for capacitive, resistive, or pressure detection. Additionally, the user interface can be accompanied by one or more visual aspects presented upon a display, such as a menu, button, dialog box, icon and the like.

The description that follows will describe the concepts in connection with a touch screen. The concepts are not restricted to a touch screen, however, and can be adapted to a variety of mobile devices that lack a touch screen. Further, the description that follows will describe the concepts in connection with various visual aspects and indicators, but the concepts are not necessarily limited to the particular visual elements described.

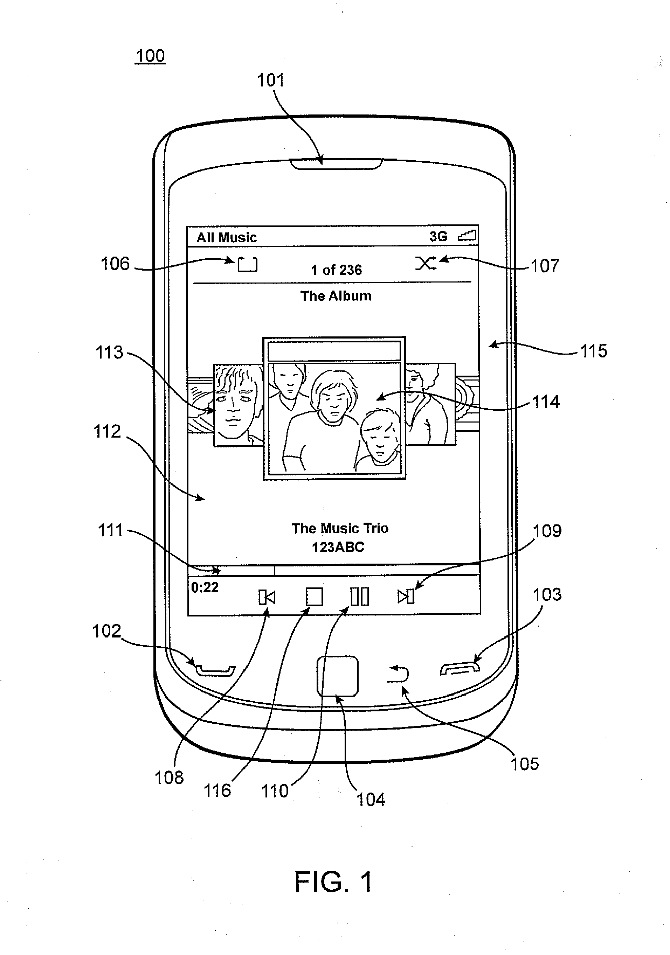

One implementation of the present disclosure is illustrated in FIG. 1 as a mobile device 100. The implementation illustrated in FIG. 1 comprises speaker 101 with a corresponding a microphone (not illustrated) for telephonic communication. Mobile device 100 further comprises a call button 102, an end button 103, a touch pad 104, a back button 105 and a display 112. The display 112 can depict any number of applications such as email, telephone, word processing, spreadsheets, presentations, photo albums, and video or album players on front face 115. In the example, an album player is illustrated. The album player as described herein can play audio and video files. When enabled to play both audio and video files, the album player provides a single player that can be utilized by the user to listen to a song and watch videos. The integration of video and audio reduces confusion by simplifying the controls. In other implementations, such as video playback, additional controls can be provided. Album, as used herein, can refer to either an audio or video file, or a compilation of files that are linked together. In one example, a single album can comprise both audio and video files. In other implementations, the album is limited to either audio or video files. The files can be configured in a standard format or a format particularly customized for mobile device 100.

In one example, the album player can comprise a repeat button 106, a shuffle button 107, a back button 108, a forward button 109, a stop button 115, a play/pause button 110, and a scroll bar 111. The repeat button 106 can allow the mobile device 100 to play an album again. When the shuffle button 107 is activated, the albums can be shuffled such that a random album is selected. The back button 108 can return the player to a previous album or song. When the forward button is activated, the device can play the next album stored on the mobile device 100. If the album player is in a shuffle mode, the next album can be selected at random. Moreover, play/pause button 110 can implement either playing or pausing functionality; as only one or another is applicable at a time, the button can only perform one function or the other. Accordingly, as is known in the art, either a triangle or two parallel lines can appear at the location of play/pause button 110, depending on whether a file is playing at the time. If a file is playing, the two parallel lines will appear, thereby allowing a user to pause the player by selecting the play/pause button 110. If a file is not playing, a triangle can appear, thereby allowing a user to select a file for playing at the device.

Additionally, to navigate albums or songs in the album player, the display 112 can further comprise album art depicted by icons on the display. A focused icon 114 appears at the center of the display 112 in a focused position. In the illustrated implementation of FIG. 1, the album art is depicted as gradually smaller icons emanating from a center icon, thereby giving the illusion of a carousel 113. The icons can be representative of files, applications, settings, or folders containing combinations thereof. The arrangement of icons as illustrated allows for a continuous loop of albums to be presented to the user, and gives the icons an appearance that creates an illusion that the icons are arranged in a circular fashion about an imaginary axis. Such arrangement of icons can be advantageous because more than one icon can be viewed at a time, but a single icon can be seen more clearly. Such arrangement can be particularly advantageous if an application window or a display is small. The arrangement of albums can be ordered in a variety of different ways on the carousel 113. For example, the albums can be ordered alphabetically by artist, title, or genre. In another implementation, the albums can be arranged in a primary and secondary arrangement. For example, the albums can be arranged by genre, then by artist and then by title. Other orders of arrangements can be implemented by the user to allow for desired preferences.

In the illustrated implementation, the icons are arranged in the carousel 113 with a currently focused icon 114 at the center of the display 112 in a first configuration, thereby placing the icon in a selectable configuration. A selectable configuration can be a configuration where the icon is capable of being selected and activated; for example, in the case of a music file, the music file can be played. Accordingly, the currently focused icon 114 is signified for user-selection. In other implementations, the icons can be arranged such that the icons are in a horizontal or vertical list. When the display 112 is held in an upright orientation, the icons can be arranged in a vertical list and displayed one over the other. The icons can also be arranged in a horizontal configuration such that the icons are identical in size and arranged horizontally across the display 112. An accelerometer 824 can be included to sense the orientation of the device, thereby allowing the device to present the information on the display 112 in a manner most appropriate to a user standing on the ground,

In any implementation, as seen from FIG. 1, items can appear as icons on the display 112 presented in a carousel, a horizontal arrangement, or a vertical arrangement. While the implementations presented herein focus on presentation of albums, other implementations can be made, including applications, such as a file manager program, that contain items that can be presented for user selection. Accordingly, any type of file or application can be substituted for the album art used in the examples of the present disclosure.

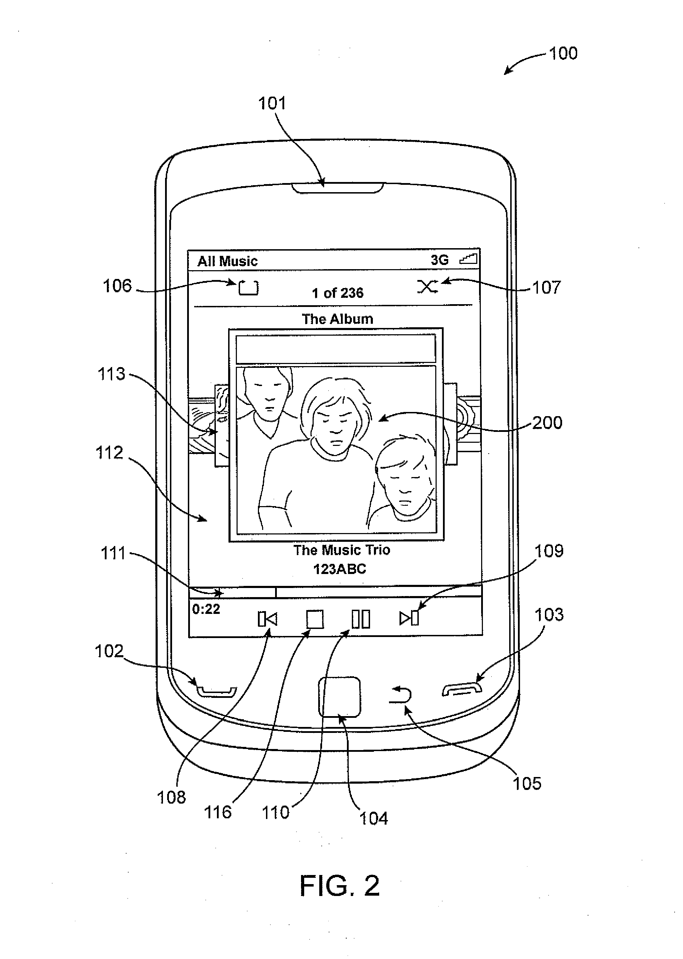

The touch pad device 104 of FIGS. 1 and 2 can be used for scrolling navigation of the device. For example, a user can brush a finger over the touch pad device 104 to affect a corresponding motion on the display 112. In the example illustrated in FIG. 1, the album art can be navigated from side-to-side by swiping over the touch pad device 104. To illustrate, the user can brush a finger from left to right over the touch pad device 104, and a corresponding left-to-right motion can appear in the carousel 113, thereby allowing a user to view icons the icons adjacent to the currently focused icon 114; several left-to-right motions can be needed to reach the desired icon. Quick motions over touch pad device 104 can result in correspondingly quick motions of the icons. Similarly, slow motions over the touch pad device 104 can result in correspondingly slow motions of the icons, which can make the icons easier to see as the icons pass by. When an item that the user desires to select appears, the user can, for example, depress the touch pad device 104 to select the item. A dome switch can be positioned beneath the touch pad device 104 to provide an input in response to depression of the touch pad device 104.

A touch navigation feature that allows for navigation by touching the display on a touch screen, both in conjunction with the touch pad device 104 or by itself, can also be implemented. Touch navigation can be accomplished in a manner similar to that of the touch pad device 104. Specifically, a user can brush a finger from left to right over the touch screen, and a corresponding left-to-right motion can appear in the carousel 113, thereby allowing a user to view icons the icons adjacent to the currently focused icon 114. Further, an item can be selected simply by making contact with the touch screen at the location of the desired item. In still further implementations, a tactile feedback button can be incorporated into the display 112 to give the user tactile feedback when selecting a desired item.

In the specific example illustrated in FIG. 1, album art is depicted, and a user can scroll through the album art icons using the touch pad device 104, the touch screen, or other navigational input. In the illustrated example, there are several album art icons, including a highlighted icon 200 located in the center of the display 112 that is capable of immediate user-selection. As used in the disclosure, a highlighted icon means an icon displayed in a way that stands out on the display 112. When the album art is highlighted, the user can select the album art by, for example, depressing the touchpad 104 or touching the location of the display 112 that has the album art icon. Text describing the highlighted item can also be displayed when the item is in focus. When the text is longer than can be conveniently displayed in the available space, the text can be displayed in a marquee or ticker-tape fashion. Once selected, a microprocessor 838 of the mobile device 100 can, for example, begin playback of the album corresponding to the album art.

Some users can have difficulty identifying album art if the display is small—as illustrated in FIG. 1—or if a window on a larger display is similarly small. To aid in selection of the highlighted album art icon, the device can display the icon in a second configuration that is more prominent. For example, the album art icon can become larger, after expiration of a predetermined period of time, to make the album art icon more visible when the item is displayed while the user pauses navigation. FIG. 2 illustrates an implementation of the second configuration. As seen in FIG. 2, the album art icon is displayed in a larger view to make the album art icon easier to see. The predetermined period of time for pausing on the icon can be, for example, three seconds, which would likely ensure that the icon is of interest to the user because the icons have not been further scrolled. Then, the currently focused icon 114 can be presented in a more visible second configuration; for example, FIG. 2 illustrates the highlighted icon 200 in a larger view than icon 113. When an input is detected, the device can present the highlighted icon 200 in the same configuration, the first configuration, or a third configuration; and the microprocessor 838 can perform a function, such as playing an album in a media player application, associated with the highlighted icon 200.

The highlighted icon 200 can be scaled to increase in size, from the first configuration to a second configuration, to display the highlighted icon 200 more prominently as described above. The increase in size of the highlighted icon 200 can be a fifty percent increase in one implementation. In another implementation, the highlighted icon 200 can increase in size between ten percent and one hundred percent. When the increase in size of the highlighted icon 200 is less than fifty percent but greater than ten percent, the size of the highlighted icon 200 can be enough to provide the user with additional information desired without completely obscuring the adjacent icons. In at least one implementation, the increase in size can be user definable. When the mobile device 100 allows for user configuration, the size of the highlighted icon 200 can be adjustable to accommodate the user's eyesight. For example, the user can change the size of the album art in the second configuration.

Still further implementations can allow for the album art to be presented in sharper detail in the second configuration, Due to resource constraints, album art can be presented in a lower initial resolution. Presenting album art in a lower initial resolution allows the album player to use fewer system resources while scrolling because less information is processed and displayed. However, if scrolling pauses, the system can have time to render one or more of the images in a higher-resolution format, thereby presenting the images more prominently in a second configuration.

The two implementations of presenting the information in a larger format and presenting the information in a higher resolution can be used together or separately in still further implementations. Other implementations allowing for a more-visible second configuration are contemplated, such as rendering a colored outline around the icon of interest. The examples stated herein are only exemplary.

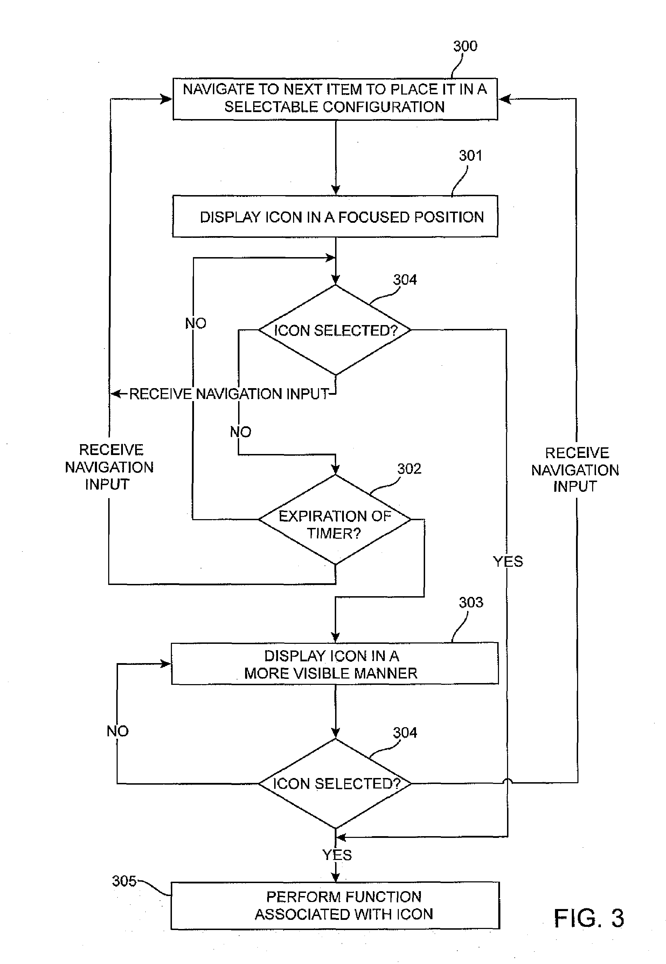

FIG. 3 illustrates a flowchart of the implementations described above. First, a user navigates to an icon, thereby placing the icon 113 in a selectable configuration 300. Then, the highlighted icon 200 is in a focused and highlighted position 301. Next, a timer starts while the icon remains in focus 302. The user can select the icon that is in a selectable configuration304., which can cause a function associated with the icon to be performed. If a navigational input is received, a next icon is displayed. If the timer expires, the icon is displayed more prominently 303, that is, the icon is in a more visible second configuration. While the icon is displayed in a second configuration, a further navigational input can be received and a next icon displayed in a first configuration; the next icon is placed in a focused configuration. In another outcome, the user can select the icon and the microprocessor 838 can perform a function associated with the icon 305.

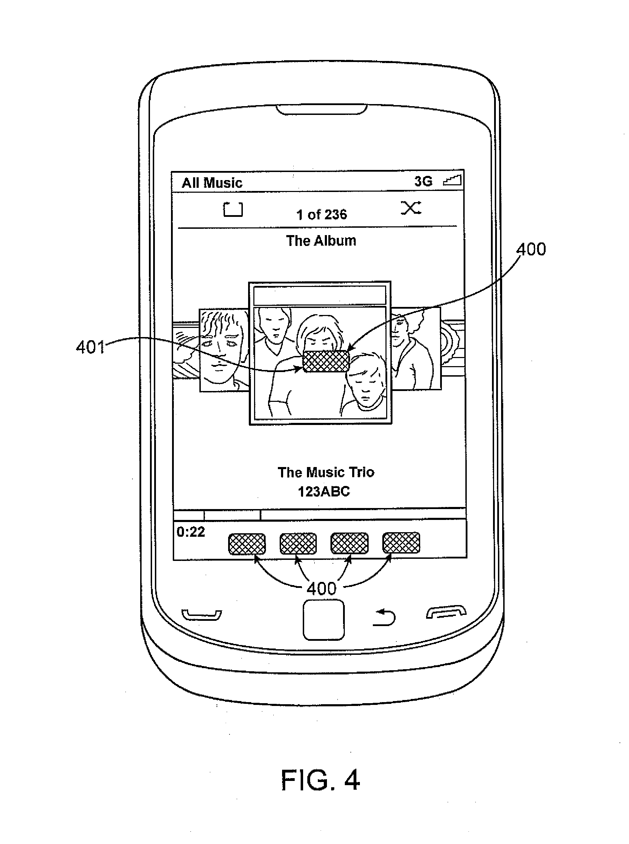

Selection of icons and menus can be accomplished through the use of tactile feedback as illustrated in FIG. 4. Tactile feedback buttons 400 can be implemented in conjunction with the display 112. For example, one or more tactile feedback buttons 400 can be integrated into the display that corresponds to the area where an icon is displayed. Tactile feedback can be provided to simulate a ridge or bump, but can alternatively be provided in the form of additional friction along the surface of an overlay of the display 112. The individual components of the tactile feedback buttons can, for example, have different shapes such as one or more bumps, squares, circles, or triangles, but are not limited to the named shapes.

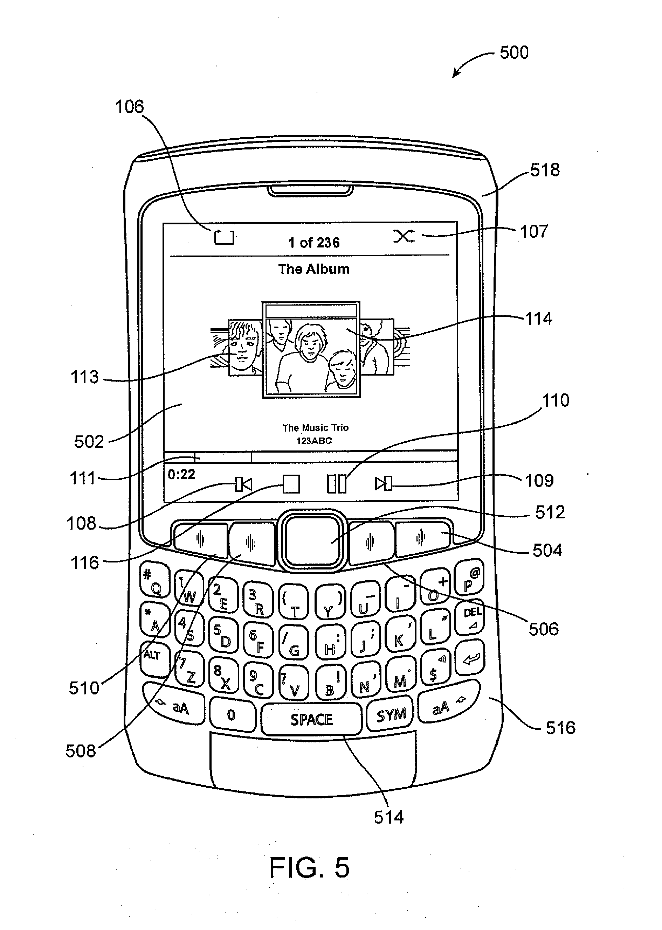

The tactile feedback buttons 400 can comprise pressure sensor(s) and or touch location sensor(s) that can be utilized to determine touch location data indicative of a sweeping, swiping, or sliding contact. Such information can be useful to select from among two or more simultaneously detected touch locations. Such a determination can be utilized, for example, to select the touch location for providing tactile feedback. For example, the pressure of touch contact can be used to determine which simultaneous contact location to track when a sliding, swiping, or sweeping contact is detected. Referring to Figure 5, a front view of a mobile device 500 in accordance with an exemplary implementation is illustrated. As shown, the communication has a full QWERTY keyboard 516. Each key of the keyboard 516 can be associated with at least one indicia representing an alphabetic character, a numeral, or a command (such as a space command, return command, or the like). The plurality of the keys having alphabetic characters is arranged in a standard keyboard layout. This standard keyboard layout can be a QWERTY layout (shown in Figure 5), a QZERTY layout, a QWERTZ layout, an AZERTY layout, a Dvorak layout, a Russian keyboard layout, a Chinese keyboard layout, or other similar layout, as well as reduced keyboard layouts. These standard layouts are provided by way of example and other similar standard layouts are considered within the scope of this disclosure. The keyboard layout can be based on the geographical region in which the device is intended for sale. In some examples, the keyboard can be interchangeable such that the user can switch between layouts. In other examples, the keyboard is a virtual keyboard provided on a touch screen display (not shown).

As shown in FIG. 5, the mobile device 500 can be cradleable in the palm of a user's hand. The handheld device can be provided with keyboard 516 to enter text data and place telephone calls, and display 502 for communicating information to the user. Connect/send key 510 can be provided to aid in placement of a phone call. Additionally, disconnect/end key 504 can be provided. Send key 510 and end key 510 can be arranged in a row of keys including navigation tool 512. Additionally, the row of keys including the navigation tool can include menu key 508 and escape key 506. Menu key 508 can be used to bring up a menu, and escape key 506 can be used to return to the previous screen or previous menu selection.

As illustrated in FIG. 5, keys, typically of a push-button or touch pad nature, can perform well as data entry devices, but present problems to the user when also used to affect navigational control over a screen-cursor. To solve the problem, the present mobile device can include an auxiliary input that acts as a cursor navigational tool and can be exteriorly located on the front face of the device 500. The front face location 518 of the device 500 is a particularly advantageous location because the location can make the tool easily thumb-actuable like the keys of the keyboard. In a particularly useful implementation, the navigational tool can be a trackball 512 which can be easily utilized to instruct two-dimensional screen-cursor movement in substantially any direction, and act as an actuator when the ball of the trackball is depressed like a button. The placement of the trackball can be above the keyboard 516 and below the display 502; such placement avoids interference during keyboarding and does not block the user's view of the display screen during use (see FIG. 5 for an example).

Further aspects of the implementations, devices and methods of employment described above are expanded upon in the following details. An exemplary implementation of mobile device 500, as shown in FIG. 5, can be cradleable in a palm of a user's hand. The size of mobile device 500 can be such that a user is capable of operating mobile device 500 using the same hand that is holding mobile device 500. In one implementation, the user can actuate all features of mobile device 500 using the thumb of the cradling hand; however, in other implementations, features can require the use of more than just the thumb of the cradling hand. One implementation of mobile device 500 features the keyboard 516 on the face of the mobile device 500, which is actuable by a thumb of a hand cradling mobile device 500. The user can also hold mobile device 500 in a manner that enables two-thumb typing.

The mobile device 500 can include an input portion and an output display portion. The output display portion can be a display 502, such as an LCD, OLED, or other similar display device. The input portion can include a plurality of keys that can be of a physical nature, such as actuable buttons, or a software nature, typically comprising virtual representations of physical keys on a display screen (referred to herein as "software keys"). This disclosure also contemplates that the user input can be provided by a combination of the two types of keys. Each key of the plurality of keys can have at least one actuable action that can be the input of a character, a command or a function; "characters" are contemplated to include alphabetic letters, language symbols, numbers, punctuation, insignias, icons, pictures, and even a blank space. Input commands and functions can include such things as delete; backspace; move a cursor up, down, left or right; initiate an arithmetic function or command; initiate a command or function specific to an application program or feature in use; and initiate a command or function programmed by the user and other such commands and functions that are well known to those persons skilled in the art. Specific keys or other types of input devices can be used to navigate through the various applications and features thereof. Further, depending on the application or feature in use, specific keys can be enabled or disabled.

Because input commands are so common when navigating through screens, menus, applications and features thereof, users prefer to navigate the device in an efficient manner. Commonly, mobile devices can act as personal organizers that include electronic calendars. Electronic calendars have replaced the paper day-planner and offer users the ability to integrate the user's personal calendar appointments into a variety of electronic machines. For example, a user can enter an appointment in his/her personal desktop computer and incorporate that appointment into his or her mobile device, personal data assistant, laptop computer, or any other device that is capable of synchronizing the appointment. Days of the calendar can be navigated in a manner similar to that described in FIG. 3. For example, each day can be represented as an icon and a user can navigate through each day of the calendar. When the user pauses on a particular day and a predetermined period of time expires, appointments for the day can appear larger, making the appointments easier to read.

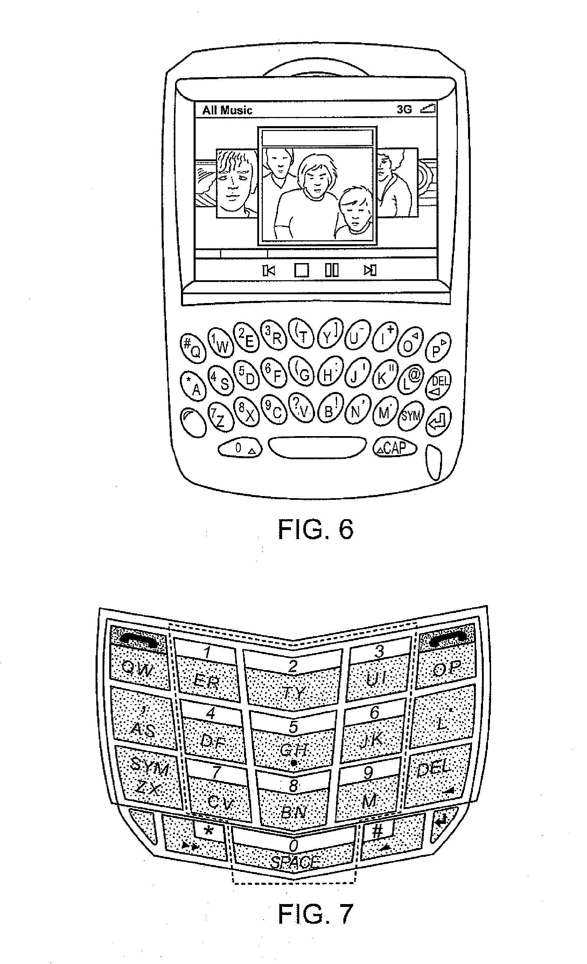

To facilitate textual data entry and navigation in another implementation, an alphabetic keyboard can be provided. In one version, a full alphabetic keyboard can be utilized in which there is one key per letter (see FIG. 6 for an example). A full alphabetic keyboard is preferred by some users because the keyboard can be arranged to resemble a standard keyboard with which the users are most familiar. The associated letters can also be advantageously organized in QWERTY, QWERTZ, AZERTY or Dvorak layouts, among others, thereby capitalizing on certain users' familiarity with specific letter orders. To stay within the bounds of a limited front surface area, however, each of the keys is likely small when, for example, at least twenty-six keys must be provided, as is the case with the English language. An alternative configuration can provide a reduced keyboard in which at least some of the keys have more than one letter associated therewith (see FIG. 7 for an example); the alternative configuration can have fewer keys. This makes the keys larger than the keys are when a full keyboard is provided on a similarly-dimensioned device. Some users will prefer the solution with larger keys; however, in that configuration, a software or hardware solution can necessary to discriminate, based on a particular key actuation, which of the several associated letters the user intends based on a particular key actuation, a problem the full keyboard avoids. Preferably, this character discrimination is accomplished utilizing disambiguation software included on the device. To accommodate software use on the device, a memory and microprocessor can be provided within the body of the handheld unit for receiving, storing, processing, and outputting data during use. Therefore, the problem of needing a textual data input means is solved by the provision of either a full or a reduced alphabetic keyboard on the presently disclosed mobile device. Persons of ordinary skill in the art should further appreciate that the keyboard can be alternatively provided on a touch sensitive screen in either a reduced or a full format.

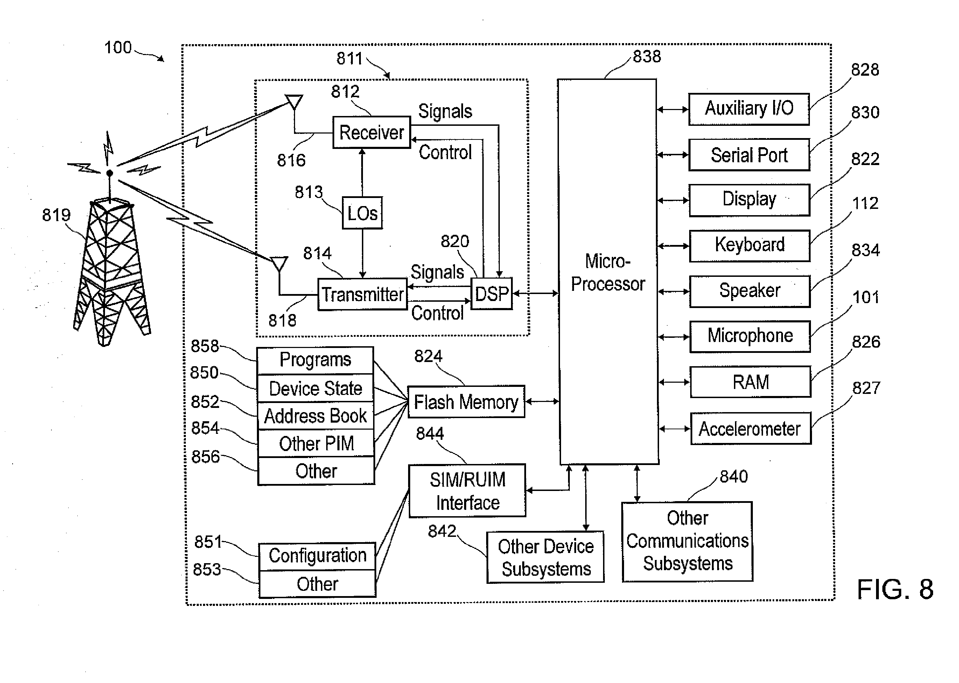

The block diagram of FIG. 8 representing communication device 800 interacting in the communication network 819, shows the inclusion of a microprocessor 838 which controls the operation of device 800. Microprocessor 838 can perform operating system functions and enables execution of software applications on communication device 800. Microprocessor 838 can further connect with auxiliary input/output (I/O) subsystem 828, serial port (preferably a Universal Serial Bus port) 830, display 822, keyboard 832, speaker 834, microphone 836, random access memory (RAM) 826, and flash memory 824. Communication subsystem 811 can perform all communication transmission and reception with wireless network 819. Other communication subsystems 840 and other device subsystems 842, such as accelerometer 824 are generally indicated as connected to the microprocessor 838 as well. An example of communication subsystem 840 is a short range communication subsystem such as a BLUETOOTH® communication module or an infrared device and associated circuits and components.

The above described auxiliary I/O subsystem 828 can take a variety of different subsystems including the above described navigation tool. The navigation tool can be a trackball based device, a thumbwheel, navigation pad, touch interface, tactile feedback button, joystick, or the like. The navigation tools can be located on the front surface of device 800, but can also be located on an exterior surface of the device 800. Other auxiliary I/O devices can include external display devices and externally connected keyboards (not shown). While the above examples have been provided in relation to the auxiliary I/O subsystem, other subsystems capable of providing input or receiving output from the mobile device 800 are considered within the scope of this disclosure. Additionally, other keys can be placed along the side of the device 800 to function as escape keys, volume control keys, scrolling keys, power switches, or user programmable keys, which can be programmed accordingly.

In an exemplary implementation, flash memory 824 is enabled to provide a storage location for the operating system, device programs, and data. While the operating system in a preferred implementation is stored in flash memory 824, the operating system in other implementations is stored in read-only memory (ROM) or a similar storage element (not shown). As those skilled in the art will appreciate, the operating system, device application or parts thereof can be loaded in RAM 826 or other volatile memory.

In an implementation, flash memory 824 can contain programs/applications 858 for execution on device 800 including address book 852, personal information manager (PIM) 854, and device state 850. Furthermore, programs 858 and other information 856 including data can be segregated upon storage in flash memory 824 of the device 800.

When device 800 is enabled for two-way communication within wireless communication network 819, device 800 can send and receive signals from a mobile communication service. Examples of communication systems enabled for two-way communication include, but are not limited to, the GPRS (General Packet Radio Service) network, the UMTS (Universal Mobile Telecommunication Service) network, the EDGE (Enhanced Data for Global Evolution) network, and the CDMA (Code Division Multiple Access) network and those networks generally described as packet-switched, narrowband, data-only technologies mainly used for short burst wireless data transfer. For the systems listed above, communication device 800 can be enabled to transmit and receive signals from communication network 819. Other systems can not require such identifying information. GPRS, UMTS, and EDGE can require the use of a SIM (Subscriber Identity Module) in order to allow communication with the communication network 819. Likewise, most CDMA systems can require the use of a RUIM (Removable Identity Module) in order to communicate with the CDMA network. The RUIM and SIM card can be used in multiple different communication devices 800. Device 800 can be able to operate some features without a SIM/RUIM card, but device 800 can not be able to communicate with the network 819. A SIM/RUIM interface 844 located within device 800 allows for removal or insertion of a SIM/RUIM card (not shown). The SIM/RUIM card features memory and holds key configurations 851, and other information 853 such as identification and subscriber related information. With a properly enabled communication device 800, two-way communication between communication device 800 and communication network 819 is possible.

If the communication device 800 is enabled as described above or the communication network 819 does not require such enablement, two-way communication enabled device 800 is able to both transmit and receive information from communication network 819. The transfer of communication can be from device 800 or to device 800. In order to communicate with communication network 819, device 800, in a preferred implementation, can be equipped with an integral or internal antenna 818 for transmitting signals to communication network 819. Likewise, communication device 800 in one implementation can be equipped with another antenna 816 for receiving communication from communication network 819. The antennas (816, 818) in another implementation are combined into a single antenna (not shown). As one skilled in the art would appreciate, the antenna or antennae (816, 818) in another implementation can be externally mounted on device 800.

When equipped for two-way communication, communication device 800 can feature communication subsystem 811. As is well known in the art, communication subsystem 811 can be modified so that communication subsystem 811 can support the operational needs of device 800. Subsystem 811 can include a transmitter 814 and receiver 812, including the associated antenna or antennae (816, 818) as described above, local oscillators (LOs) 813, and a processing module 820 which in one implementation can be a digital signal processor (DSP) 820.

This disclosure contemplates that communication by device 800 with wireless network 819 can be any type of communication that both wireless network 819 and device 800 are enabled to transmit, receive and process. In general, the type of communication can be classified as voice and data. Voice communication is communication in which signals for audible sounds are transmitted by device 800 the communication network 819. Data is all other types of communication that device 800 is capable of performing within the constraints of wireless network 819.

Although the exemplary implementation described herein employs the hard disk 160, the exemplary implementation should be appreciated by those skilled in the art that other types of computer readable media which can store data that are accessible by a computer, such as magnetic cassettes, flash memory cards, digital versatile disks, cartridges, random access memories (RAMs), read only memory (ROM), a cable or wireless signal containing a bit stream and the like, can also be used in the exemplary operating environment. Non-transitory computer-readable storage media expressly exclude media such as energy, carrier signals, electromagnetic waves, and signals per se.

Implementations within the scope of the present disclosure can also include tangible and/or non-transitory computer-readable storage media for carrying or having computer-executable instructions or data structures stored thereon. Such non-transitory computer-readable storage media can be any available media that can be accessed by a general purpose or special purpose computer, including the functional design of any special purpose processor as discussed above. By way of example, and not limitation, such non-transitory computer-readable media can include RAM, ROM, EEPROM, CD-ROM or other optical disk storage, magnetic disk storage or other magnetic storage devices, or any other medium which can be used to carry or store desired program code means in the form of computer-executable instructions, data structures, or processor chip design, When information is transferred or provided over a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable media.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, components, data structures, objects, and the functions inherent in the design of special-purpose processors, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those of skill in the art will appreciate that other implementations of the disclosure can be practiced in network computing environments with many types of computer system configurations, including personal computers, hand-held devices, multi-processor systems, microprocessor-based or programmable consumer electronics, network PCs, minicomputers, mainframe computers, and the like. Implementations can also be practiced in distributed computing environments where tasks are performed by local and remote processing devices that are linked (either by hardwired links, wireless links, or by a combination thereof) through a communications network. In a distributed computing environment, program modules can be located in both local and remote memory storage devices.

Exemplary implementations have been described hereinabove regarding mobile devices, as well as the communication networks within which the mobile devices cooperate. Persons of ordinary skill in the art should appreciate, however, that a focus of the present disclosure is the efficient display of icon information and giving prominent selection cues for icons.

## Claims

1. A mobile device comprising:
a memory (825);
a display (112), which when activated, displays icons (113) representative of a plurality of files or folders stored in the memory (825); and
a navigational input (104), which when activated allows for navigating through the plurality of icons (113), wherein the plurality of icons appear in a first configuration (114) while being navigated, and an icon is displayed in a more easily visible second configuration (200) after remaining in focus for a predetermined amount of time.

2. The mobile device according to claim 1, wherein the first configuration (114) comprises a first size and the second configuration (200) comprises a second size that is larger than the first size.

3. The mobile device according to any of the claims 1 or 2, wherein the files are media files selected from a group comprising one or more of songs, videos and games.

4. The mobile device according any of the claims 1, 2 or 3, wherein the files comprise productivity files selected from a group comprising one or more of documents, presentations and spreadsheets.

5. The mobile device according to any of the claims 1, 2, 3 or 4, wherein the predetermined period of time is based on the assumption that the icon is of interest, and is therefore presented in a more easily visible second configuration.

6. The mobile device according to any of the claims 1, 2, 3, 4 or 5, wherein said plurality of icons (113) is depicted as gradually smaller icons emanating from a center icon, thereby giving the illusion of a carousel.

7. The mobile device according to any of the claims 1, 2, 3, 4, 5 or 6, wherein said navigational input comprises at least one of the following: buttons, keys, trackballs, touch pads, and touch screens.

8. A method of navigating files on a mobile device comprising:
displaying a plurality icons (113) representative of files or folders, wherein each of the plurality of icons (113) is displayed in a first configuration (114);
navigating through the plurality of icons (113);
pausing on one icon of the plurality of icons (113), thereby causing it to be placed into a selectable configuration (114); and
displaying the icon in a highlighted second configuration (200) after expiration of a predetermined period of time.

9. The method according to claim 8, wherein the first configuration comprises a first size and the second configuration comprises a second size that is larger than the first size.

10. The method according to any of the claims 8 or 9, wherein the files are media files selected from a group comprising one or more of songs, videos and games.

11. The method according to any of the claims 8, 9 or 10, wherein the files comprise productivity files selected from a group comprising one or more of documents, presentations and spreadsheets.

12. The method according to any of the claims 8, 9, 10 or 11, wherein the predetermined period of time is based on the assumption that the icon is of interest, and is therefore presented in a more easily visible second configuration.

13. The method according to any of the claims 8, 9, 10, 11 or 12, further comprising selecting the icon that is in a selectable configuration and activating a function associated with the icon.

14. The method according to claim any of the claims 8, 9, 10, 11, 12 or 13, wherein said plurality of icons (113) is depicted as gradually smaller icons emanating from a center icon, thereby giving the illusion of a carousel.

15. A non-transitory computer-readable storage medium storing instructions which, when executed by a computing device, cause the computing device to performs steps according to the method of any one of claims 8-14.

## Amended claims

### Amended claims in accordance with Rule 137(2) EPC.

**1.** A mobile device comprising:
a memory (825);
a display (112), which when activated, displays icons (113) representative of a plurality of files or folders stored in the memory (825); and
a navigational input (104), which when activated allows for navigating through the plurality of icons (113), wherein the plurality of icons appear in a first configuration (114) while being navigated, and an icon is displayed in a more easily visible second configuration (200) after remaining in focus for a predetermined amount of time.

**2.** The mobile device according to claim 1, wherein the first configuration (114) comprises a first size and the second configuration (200) comprises a second size that is larger than the first size.

**3.** The mobile device according to any of the claims 1 or 2, wherein the files are media files selected from a group comprising one or more of songs, videos and games.

**4.** The mobile device according any of the claims 1, 2 or 3, wherein the files comprise productivity files selected from a group comprising one or more of documents, presentations and spreadsheets.

**5.** The mobile device according to any of the claims 1, 2, 3 or 4, wherein displaying an icon in a more easily visible second configuration comprises displaying an icon in a higher-resolution format.

**6.** The mobile device according to any of the claims 1, 2, 3, 4 or 5, wherein said plurality of icons (113) is depicted as gradually smaller icons emanating from a center icon, thereby giving the illusion of a carousel.

**7.** The mobile device according to any of the claims 1, 2, 3, 4, 5 or 6, wherein said navigational input comprises at least one of the following: buttons, keys, trackballs, touch pads, and touch screens.

**8.** A method of navigating files on a mobile device comprising:
displaying a plurality icons (113) representative of files or folders, wherein each of the plurality of icons (113) is displayed in a first configuration (114);
navigating through the plurality of icons (113);
pausing on one icon of the plurality of icons (113), thereby causing it to be placed into a selectable configuration (114); and
displaying the icon in a highlighted second configuration (200) after expiration of a predetermined period of time.

**9.** The method according to claim 8, wherein the first configuration comprises a first size and the second configuration comprises a second size that is larger than the first size.

**10.** The method according to any of the claims 8 or 9, wherein the files are media files selected from a group comprising one or more of songs, videos and games.

**11.** The method according to any of the claims 8, 9 or 10, wherein the files comprise productivity files selected from a group comprising one or more of documents, presentations and spreadsheets.

**12.** The method according to any of the claims 8, 9, 10 or 11, wherein displaying the icon in a highlighted second configuration comprises displaying the icon in a higher-resolution format.

**13.** The method according to any of the claims 8, 9, 10, 11 or 12, further comprising selecting the icon that is in a selectable configuration and activating a function associated with the icon.

**14.** The method according to claim any of the claims 8, 9, 10, 11, 12 or 13, wherein said plurality of icons (113) is depicted as gradually smaller icons emanating from a center icon, thereby giving the illusion of a carousel.

**15.** A non-transitory computer-readable storage medium storing instructions which, when executed by a computing device, cause the computing device to performs steps according to the method of any one of claims 8-14.
